# EUROPÄISCHE PATENTSCHRIFT

(11) **EP 0 901 708 B1**
(45) Veröffentlichungstag und Bekanntmachung des Hinweises auf die Patenterteilung: **14.08.2002**
(21) Anmeldenummer: 97922746.9
(22) Anmeldetag: 23.05.1997
(51) Int. Cl.: H02K 15/00

(54) **VERFAHREN ZUM UMBAU EINER GLEICHSTROMMASCHINE**
METHOD OF MODIFYING A DIRECT CURRENT GENERATOR
PROCEDE DE MODIFICATION D'UNE GENERATRICE A COURANT CONTINU

(30) Priorität: 28.05.1996 AT 92896
(43) Veröffentlichungstag der Anmeldung: 17.03.1999
(73) Patentinhaber: VA TECH HYDRO GmbH, 1141 Wien (AT)
(72) Erfinder: HEIMHILCHER, Erwin, A-2541 Gainfarn/Bad Vöslau (AT)
(74) Vertreter: VA TECH Patente GmbH & Co
(86) Internationale Anmeldenummer: AT9700107
(87) Internationale Veröffentlichungsnummer: WO9745940

(56) Entgegenhaltungen:
- W.MERHOF: "Die bürstenlose Erregung von Synchronmaschinen durch rotierende Halbleiter-Gleichrichter" BROWN BOVERI MITTEILUNGEN., Bd. 54, Nr. 9, September 1967, BADEN CH, Seiten 539-553, XP002039267
- K.SUZUKI ET AL.: "The Characteristics of Excitation System" 1991 INTERNATIONAL CONFERENCE ON ADVANCES IN POWER SYSTEM CONTROL, OPERATION & MANAGEMENT, 5. - 8.November 1991, HONG KONG, Seiten 480-484, XP002039268
- K.DASGUPTA: "Refurbishment of Turbo Alternator Rotors and Excitation Systems in Ageing Power Stations" INTERNATIONAL CONFERENCE ON REFURBISHMENT OF POWER STATION ELECTRIC PLANT, 7. - 8.November 1988, LONDON, Seiten 120-123, XP002039269

## Beschreibung

Die Erfindung betrifft ein Verfahren zum Umbau einer Gleichstrommaschine.

Sowohl bei Verbrauchern aber auch bei Erzeugern von elektrischer Energie ist das Umweltbewußtsein sicherlich stark ausgeprägt. So ist es auch zu verstehen, daß immer mehr bestehende Gleichstrommaschinen durch Wechselstrommaschinen ersetzt werden. Die Gleichstrommaschine hat gegenüber der Wechselstrommaschine vor allem den Nachteil, daß im Betrieb durch ihre Bürsten, die am Kommutator laufen, Abriebstaub anfällt. Von diesem Abriebstaub, der meistens Kohlenstaub ist, will der Betreiber befreit werden.

Aus diesem Blickwinkel ist es auch zu sehen, daß neben der herkömmlichen Methode, beispielsweise eine eigene Gleichstrom-Erregermaschine bereitzustellen, heute zunehmend Wechselstrom-Erregermaschinen mit ungesteuerten und/oder steuerbaren Halbleitern aufweisende Gleichrichterschaltungen in den Vordergrund treten. In diesem Zusammenhang muß man berücksichtigen, daß die benötigten Erregerleistungen sich für zweipolige Turbogeneratoren von 3 KW bei 100 KVA-Generatorleistung bis zu 3000 KW einer 1000 MVA Maschine erstrecken.

Im Zuge der Erneuerung von Maschinensätzen in Kraftwerksanlagen wird daher oft der Wechsel vom bestehenden Erregersystem mit Gleichstrommaschinen auf bürstenlose Erregung, also Wechselstrom-Erregermaschinen mit rotierenden Gleichrichtern, verlangt. Dabei wird immer die bestehende Gleichstrommaschine komplett durch eine neue Wechselstrom-Erregermaschine ersetzt.
In W. Merhof: "Die bürstenlose Erregung von Synchronmaschinenen durch rotierende Halbleiter-Gleichrichter", Brown Boveri Mitteilungen, Bd. 54, Nr. 9, Sept. 1967, Baden CH, S. 359-553 werden Aspekte einer Neugestaltung einer Wechselstrom-Erregervorrichtung beschrieben.

Aufgabe der Erfindung ist es daher, den Tausch von mit Betriebsstunden behafteten Gleichstrommaschinen gegen komplett neu hergestellte Wechselstrommaschinen zu vermeiden, wobei trotzdem saubere Betriebsbedingungen hergestellt werden sollen.

Diese Aufgabe wird durch die Erfindung gelöst. Diese betrifft ein Verfahren zum Umbau einer Gleichstrommaschine auf eine bürstenlose Wechselstrommaschine, vorzugsweise eine Außenpolmaschine, insbesondere einer mit einer Synchronmaschine gekuppelten Gleichstrom-Erregermaschine auf eine bürstenlose Wechselstrom-Erregermaschine, bei welchem der Kommutator der Gleichstrommaschine entfernt wird, und an dessen Stelle rotierende Gleichrichter eingebaut werden, und gegebenenfalls Teilkomponenten der Gleichstrommaschine ausgetauscht bzw. modifiziert werden.

Mit der Erfindung ist es erstmals möglich, den kompletten Austausch der Maschinen zu vermeiden, da lediglich Teilkomponenten, wie beispielsweise Kommutator und/oder die Rotorwicklung durch ein Diodenrad bzw. eine neue Rotorwicklung ersetzt werden. Es ist ausdrücklich darauf hinzuweisen, daß bereits der Gedanke eines Umbaues einer Gleichstrommaschine in eine bürstenlose Wechselstrommaschine als ein wesentlicher Teil der Erfindung anzusehen ist.

Wie ja allgemein bekannt, wird im Rotor einer Gleichstrommaschine Wechselspannung erzeugt, die über einen mechanischen Gleichrichter, dem Kommutator, gleichgerichtet und als wellige Gleichspannung an den Maschinenklemmen zur Verfügung steht. Diesem Umstand Rechnung tragend, könnte rein prinzipiell der Kommutator durch ein Diodenrad mit n-Zweigen ersetzt werden. Dadurch würde die Maschine jedoch eine andere Spannung abgeben. Aus diesem Grund ist aller Voraussicht nach auch die Rotorwicklung mit anderer Windungszahl neu auszuführen. Ausgehend vom gleichen magnetischen Fluß vor und nach dem Umbau, kann die Polwicklung eventuell gleich gelassen werden.

Daraus resultiert ein wesentlicher wirtschaftlicher, aber auch ein ökologischer Vorteil. So ist ein wesentlicher wirtschaftlicher Vorteil gegeben, da nur einige Komponenten modifiziert werden müssen. Es entsteht auch eine geringere Menge an Abfall, da die meisten Teile und Komponenten direkt ohne Umarbeitung weiter verwendet werden können. Darüber hinaus fallen geringere Entsorgungskosten an, und auch die Umweltbelastung wird stark minimiert.

Nach einem weiteren Merkmal der Erfindung werden die Bürsten und die Bürstenhalter des Kommutators entfernt und mitrotierende Ausleitungen eingebaut. Durch die Entfernung der Bürsten und Bürstenhalter ergeben sich weniger Ventilationsverluste im Betrieb, und es wird auch Platz für die rotierenden Gleichrichter geschaffen. Um die Stromführung zur gegebenenfalls gekuppelten Synchronmaschine zu gewährleisten, werden die Ausleitungen benötigt.

Nach einer weiteren Ausgestaltung der Erfindung wird die Rotorwicklung erneuert oder modifiziert bzw. auf eine Ein- oder Mehrphasenwicklung umgebaut Im Gegensatz zur Anordnung eines n-phasigen Diodenrades ist man mit dieser Ausgestaltung ausgangsspannungsmäßig relativ frei und kann obendrein eine Wirkungsgradverbesserung erzielen.

Gemäß einem besonderen Merkmal der Erfindung wird, soferne eine Kompensationswicklung bei der Gleichstrommaschine vorhanden ist, diese auf eine Dampferwicklung umgebaut. Die Kompensationswicklung wird mit Kurzschlußringen versehen, und so zur Dämpferwicklung umgebaut. Dadurch ist auch ein Betrieb mit Schieflasten möglich, und ebenso ist eine bessere Abdämpfung der Oberwellen gewährleistet.

Gemäß einer weiteren Ausgestaltung der Erfindung werden, soferne bei der Gleichstrommaschine die Wendepole vorhanden sind, diese inklusive der Bewicklung entfernt. Dadurch ist eine Verringerung der magnetischen Streuwege gegeben, sodaß ein besserer Wirkungsgrad erreicht wird.

Es können auch die nun nicht mehr erforderlichen Schleifringe bei der Synchronmaschine entfernt werden, wodurch eine weitere Verlustminimierung durch Senkung der Ventilationsverluste gegeben ist.

Natürlich läßt sich auch jedes beliebige Teilrefurbishment ausführen, wie beispielsweise ein neues Rotorblechpaket oder neue Polwicklungen, bis hin zu neuen Polen mit allen bekannten Vorteilen, wie Optimierung des elektromagnetischen Kreises, Leistungssteigerung und Wirkungsgradverbesserung.

Die Erfindung wird an Hand von Ausführungsbeispielen, die in der Zeichnung dargestellt sind, näher erläutert. Die Fig. 1 zeigt eine Synchronmaschine mit einer Gleichstrom-Erregermaschine, die Fig. 2 eine Synchronmaschine mit einer fremderregten, bürstenlosen Wechselstrom-Erregermaschine, Fig. 3 eine Prinzipskizze einer Maschine als Gleichstrom-Erregermaschine und Fig. 4 eine Prinzipskizze der Maschine als Wechselstrom-Erregermaschine.

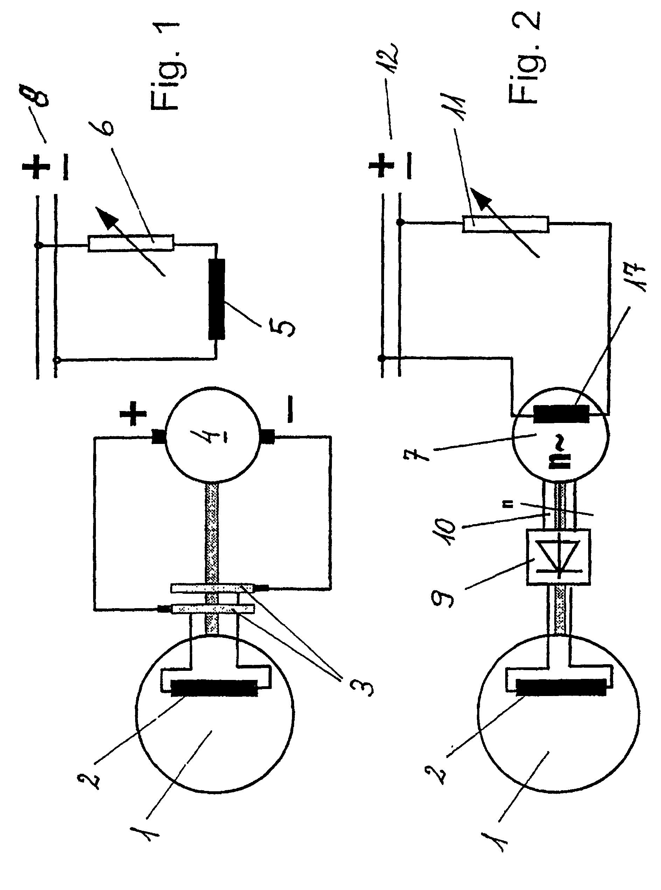

Gemäß Fig. 1 ist eine Synchronmaschine 1 mit ihrer Polradwicklung 2 und den Schleifringen 3 mit einer Gleichstrom-Erregermaschine 4 gekuppelt. Die Gleichstrom-Erregermaschine 4 mit ihrer Erregerwicklung 5, der ein verstellbarer Widerstand bzw. ein Feldregler 6 in Serie geschaltet ist, ist mit der Synchronmaschine 1 direkt oder indirekt gekuppelt. Die Erregerwicklung 5 und der Widerstand 6 sind an einem Gleichstromnetz 8 angeschlossen.

Gemäß Fig. 2 wird, um den Abriebstaub zu vermeiden, die Synchronmaschine 1 mit einer fremderregten bürstenlosen Wechselstrom-Erregermaschine 7 gekuppelt. Die Synchronmaschine 1 mit ihrer Polradwicklung 2 wird über eine mitrotierende Gleichrichterschaltung 9, die von der Wechselstrom-Erregermaschine 7 angespeist wird, erregt Dabei können entsprechend der Ankerwicklung der Wechselstrom-Erregermaschine 7 beliebig viele Ausleitungen 10 vorgesehen sein.

Die Wechselstrom-Erregermaschine 7 mit ihrer Feldwicklung 17 ist über einen verstellbaren Widerstand 11 an das Spannungsnetz 12 angeschlossen.

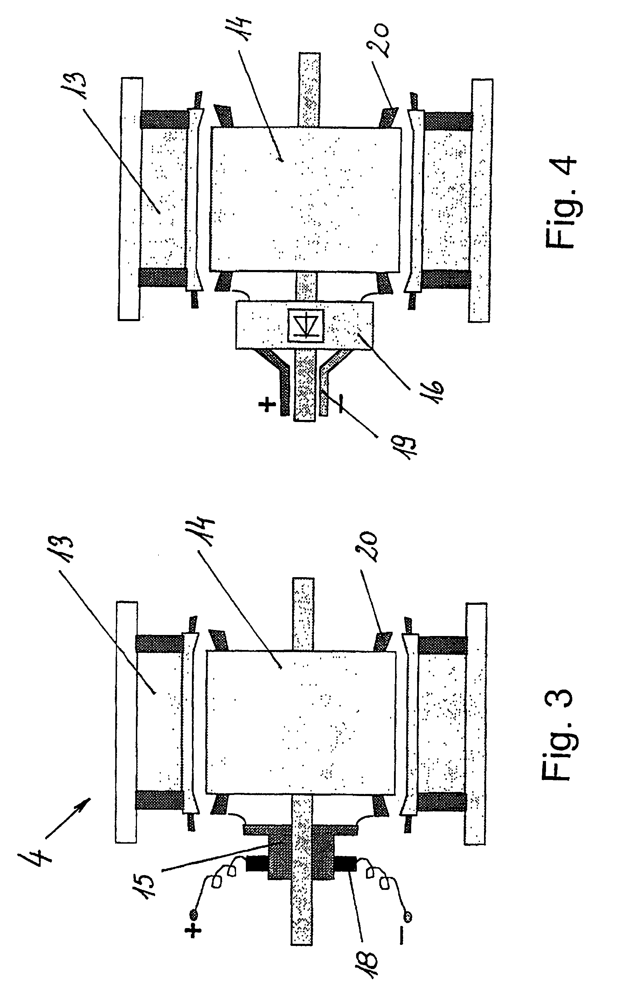

Gemäß der Fig. 3 weist die aus Stator 13 und Rotor 14 bestehende Gleichstrommaschine, die als Gleichstrom-Erregermaschine 4 ausgeführt ist, den Kommutator 15 und den Bürstenapparat 18 auf. Gemäß der Fig. 4 wird der Kommutator 15 entfernt, und an dessen Stelle werden rotierende Gleichrichter 16 mit entsprechend mitrotierenden Ausleitungen 19 eingebaut.

Gegebenenfalls ist auch die Rotorwicklung 20 den neuen Gegebenheiten anzupassen.

Durch diesen Umbau wird aus der Gleichstrommaschine eine Wechselstrommaschine, wobei nur wenige Teilkomponenten modifiziert worden sind.

## Patentansprüche

1. Verfahren zum Umbau einer Gleichstrommaschine auf eine bürstenlose Wechselstrommaschine, vorzugsweise eine Außenpolmaschine, insbesondere einer mit einer Synchronmaschine (1) gekuppelten Gleichstrom-Erregermaschine (4) auf eine bürstenlose Wechselstrom-Erregermaschine (7), bei welchem der Kommutator (15) der Gleichstrommaschine entfernt wird und an dessen Stelle rotierende Gleichrichter (16) eingebaut werden, und gegebenenfalls Teilkomponenten der Gleichstrommaschine ausgetauscht bzw. modifiziert werden.

2. Verfahren nach Anspruch 1, **dadurch gekennzeichnet, daß** die Teilkomponenten Bürsten und die Bürstenhalter (18) des Kommutators (15) entfernt und mitrotierende Ausleitungen (10 bzw. 19) eingebaut werden.

3. Verfahren nach einem der Ansprüche 1 bis 2, **dadurch gekennzeichnet, daß** die Teilkomponente Rotorwicklung (20) erneuert oder modifiziert bzw. auf eine Ein- oder Mehrphasenwicklung umgebaut wird.

4. Verfahren nach einem der Ansprüche 1 bis 3, **dadurch gekennzeichnet, daß** soferne eine Kompensationswicklung bei der Gleichstrommaschine vorhanden ist, diese Teilkomponente auf eine Dämpferwicklung umgebaut wird.

5. Verfahren nach einem der Ansprüche 1 bis 4, **dadurch gekennzeichnet, daß** sofeme bei der Gleichstrommaschine die Wendepole vorhanden sind, diese Teilkomponenten inklusive der Bewicklung entfernt werden.

## Claims

1. A method of modifying a direct-current machine into a brushless alternating-current machine, preferably into an external-pole machine, specifically modifying a direct-current exciter (4) coupled to a synchronous machine (1) into a brushless alternating-current exciter (7), in which the commutator (15) of the direct-current machine is removed and rotating rectifiers (16) are built in instead and subcomponents of the direct-current machine are replaced or modified as appropriate.

2. The method of Claim 1 **characterized in that** the subcomponents brushes and the brush holders (18) of the commutator (15) are removed and rotating output cables (10 or 19) are built in.

3. The method of any one of Claims 1 to 2 **characterized in that** the subcomponent rotor winding (20) is renewed or modified or is converted into a single-phase or polyphase winding.

4. The method of any one of Claims 1 to 3 **characterized in that** if a compensating winding is present in the direct-current machine this subcomponent is converted into a damper winding.

5. The method of any one of Claims 1 to 4 **characterized in that** if the commutating poles are present in the direct-current machine these subcomponents including the winding-on are removed.

## Revendications

1. Procédé de modification d'une génératrice à courant continu pour obtenir une génératrice à courant alternatif sans balai, de préférence une génératrice à pôles extérieurs, en particulier d'une excitatrice à courant continu (4) couplée à une génératrice synchrone (1), pour obtenir une excitatrice à courant alternatif (7) sans balai, pour lequel le commutateur (15) de la génératrice à courant continu est enlevé et à cet emplacement étant installés des redresseurs (16) rotatifs et, le cas échéant, des composants partiels de la génératrice à courant continu étant remplacés ou modifiés.

2. Procédé selon la revendication 1, **caractérisé en ce que** les composants partiels que sont les balais et les porte-balais (18) du commutateur (15) sont enlevés et des lignes de sortie (10) et/ou (19) tournant conjointement étant montées.

3. Procédé selon l'une des revendications 1 à 2, **caractérisé en ce que** le composant partiel qu'est le bobinage de rotor (20) est remplacé ou modifié ou converti pour un bobinage monophasé ou polyphasé.

4. Procédé selon l'une des revendications 1 à 3, **caractérisé en ce que**, dans la mesure où un bobinage à compensation est prévu dans la génératrice à courant continu, ce composant partiel est transformé pour obtenir un bobinage amortisseur.

5. Procédé selon l'une des revendications 1 à 4, **caractérisé en ce que**, dans la mesure où la génératrice à courant continu comporte des pôles de commutation, ces composants partiels, y compris le bobinage, sont enlevés.
